(19) Europäisches Patentamt
European Patent Office
Office européen des brevets

(11) EP 2 382 266 B1

(12) # EUROPÄISCHE PATENTSCHRIFT

(45) Veröffentlichungstag und Bekanntmachung des Hinweises auf die Patenterteilung:
**27.11.2013 Patentblatt 2013/48**

(21) Anmeldenummer: **09767987.2**

(22) Anmeldetag: **10.12.2009**

(51) Int Cl.:
***C08L 25/12*** *(2006.01)* ***C08L 55/02*** *(2006.01)*
***C08L 69/00*** *(2006.01)* ***C08L 83/10*** *(2006.01)*

(86) Internationale Anmeldenummer:
**PCT/EP2009/008817**

(87) Internationale Veröffentlichungsnummer:
**WO 2010/072335 (01.07.2010 Gazette 2010/26)**

(54) **SCHLAGZÄHMODIFIZIERTE POLYCARBONAT-ZUSAMMENSETZUNGEN**

IMPACT STRENGTH MODIFIED POLYCARBONATE COMPOUNDS

COMPOSITIONS DE POLYCARBONATE À RÉSILIENCE MODIFIÉE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **23.12.2008 DE 102008062904**
**23.01.2009 DE 102009005762**

(43) Veröffentlichungstag der Anmeldung:
**02.11.2011 Patentblatt 2011/44**

(73) Patentinhaber: **Bayer Intellectual Property GmbH**
**40789 Monheim (DE)**

(72) Erfinder:
- **FELDERMANN, Achim**
**40597 Düsseldorf (DE)**
- **WENZ, Eckhard**
**50931 Köln (DE)**
- **SEIDEL, Andreas**
**41542 Dormagen (DE)**
- **AVTOMONOV, Evgeny**
**51373 Leverkusen (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(56) Entgegenhaltungen:
**WO-A1-00/24829 US-A1- 2008 108 751**

- **DATABASE CA [Online] CHEMICAL ABSTRACTS SERVICE, COLUMBUS, OHIO, US; 21. September 2006 (2006-09-21), SHINOMIYA, TADASHI ET AL: "Impact-resistant thermoplastic resin compositions with good flowability and sliding properties, and their moldings" XP002565483 gefunden im STN Database accession no. 145: 315791 -& JP 2006 249163 A (SUMITOMO DOW LIMITED, JAPAN) 21. September 2006 (2006-09-21)**

EP 2 382 266 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft schlagzähmodifizierte Polycarbonat-Zusammensetzungen, welche ein erstes Pfropfpolymerisat enthaltend Silikonacrylat-Komposit-Kautschuk als Pfropfgrundlage, wobei der Anteil an Silikonkautschuk 65 - 95 Gew.-% (bezogen auf die Pfropfgrundlage) beträgt, und ein zweites Pfropfpolymerisat, welches freies, d.h. nicht chemisch an den Kautschuk gebundenes Copolymer mit einem gewichtsgemittelten Molekulargewicht von 60000 bis 150000 g/mol enthält, die Verwendung der Polycarbonat-Zusammensetzungen zur Herstellung von Formkörpern und die Formkörper selbst.

US 2002/077417 A1 offenbart flammgeschützte Zusammensetzungen enthaltend (a) Polycarbonat, (b) Propfpolymer mit einem Silikonacrylat-Kompositkautschuk, wobei das Verhältnis von Silikon zu Acrylat 99:1 bis 1:99 beträgt, (c) gegebenenfalls Füllstoff wie beispielsweise Talk, (d) Phosphorsäureester als Flammschutzmittel, (e) gegebenenfalls weitere Additive wie beispielsweise ABS, SAN und Antidrippingmittel. Als Beispiele werden Zusammensetzungen enthaltend Metablen® S-2001 offenbart, welches ein Pfropfpolymer mit einer Pfropfgrundlage aus Silikon-Butylacrylat-Kompositkautschuk ist, welches aus ca. 17 Gew.-% Methylmethacrylat, ca. 9 Gew.-% Organosiloxan und ca. 74 Gew.-% Butylacrylat besteht. US 2002/077417 A1 offenbart aber nicht Zusammensetzungen enthaltend ein Pfropfpolymerisat mit einem Silikonacrylat-Komposit-Kautschuk als Pfropfgrundlage, wobei der Anteil an Silikonkautschuk 65 - 95 Gew.-% (bezogen auf die Pfropfgrundlage) beträgt.

JP-A 08-259791 offenbart flammgeschützte Zusammensetzungen enthaltend Polycarbonat und einen Silikonacrylatkautschuk mit 30-99% Siloxan.

JP-A 2000-017136 offenbart Zusammensetzungen enthaltend Polycarbonat, 1 bis 40 Gew.-% oligomere Phosphorsäureester und Pfropfpolymer mit einer Pfropfgrundlage aus Silikonacrylatkautschuk, welches 60-99 Gew.-% Polyorganosiloxan enthält, gegebenenfalls Polytetrafluorethylen und gegebenenfalls Talk.

JP-A 2002-069282 offenbart Zusammensetzungen enthaltend Polycarbonat, Kompositkautschuk (wie beispielsweise Metablen® SX-005), oligomere Phosphorsäureester, Silikonöl, gegebenenfalls Polytetrafluorethylen und gegebenenfalls Additive.

WO-A 00/39210 offenbart Zusammensetzungen enthaltend Polycarbonat, Copolymer, oligomere Phosphorsäureester, Pfropfpoylmer (beispielsweise Metablen S-2001) mit einem Silikonacrylatkautschuk als Pfropfgrundlage, wobei der Anteil an Polyorganosiloxan 3 Gew.-% bis 90 Gew.-% beträgt, gegebenenfalls Polytetrafluorethylen und einem Verstärkungsstoff wie beispielsweise Talk.

EP-A 0 641 827 offenbart Zusammensetzungen enthaltend aromatisches Polycarbonat, Pfropfpoylmer von Vinylmonomer auf Dienkautschuk, Phosphorsäureester, Polytetrafluorethylen, anorganischen Füllstoff wie beispielsweise Talk und Kompositkautschuk aus Silikon- und Acrylatkautschuk.

JP-A 07316409 offenbart Zusammensetzungen enthaltend Polycarbonat, Phosphorsäureester, Pfropfpoylmer mit einem Silikonacrylatkautschuk als Pfropfgrundlage, wobei der Anteil an Polyorganosiloxan 1 - 99 Gew.-% und der Anteil an Polyalkyl(meth)acrylatkautschuk 99 - 1 Gew.-% betragen.

Die oben genannten Dokumente des Standes der Technik offenbaren aber nicht Zusammensetzungen enthaltend ein zweites Pfropfpolymerisat welches freies, d.h. nicht chemisch an den Kautschuk gebundenes Copolymer mit einem gewichtsgemittelten Molekulargewicht von 60000 bis 150000, enthält.

Aufgabe der vorliegenden Erfindung ist die Bereitstellung von schlagzähmodifizierten Polycarbonat-Formmassen mit einer optimalen Kombination aus guter Reißdehnung, guter Hydrolysebeständigkeit und niedriger Schmelzeviskosität.

Es wurde somit überraschend gefunden, dass Zusammensetzungen enthaltend

A) 60 bis 80 Gew.-Teile (jeweils bezogen auf die Summe der Gewichtsteile der Komponenten A+B+C+D) aromatisches Polycarbonat und/oder aromatisches Polyestercarbonat,

B) 8 bis 13 Gew.-Teile (jeweils bezogen auf die Summe der Gewichtsteile der Komponenten A+B+C+D) eines ersten Pfropfpolymerisats, dadurch gekennzeichnet, dass die Pfropfgrundlage ein Silikonacrylat-Komposit-Kautschuk, in bevorzugter Ausführungsform aus sich gegenseitig durchdringendem Silikonkautschuk- und Polyalkyl(meth)acrylatkautschuk ist, wobei der Anteil an Silikonkautschuk 65 - 95 Gew.-%, bevorzugt 75 bis 95 Gew.-%, insbesondere 80 bis 95 Gew.-% (bezogen auf die Pfropfgrundlage) beträgt,

C) 3 bis 7 Gew.-Teile (bezogen auf die Summe der Gewichtsteile der Komponenten A+B+C+D) eines zweiten Pfropfpolymerisats, welches freies, d.h. nicht chemisch an den Kautschuk gebundenes Copolymer mit einem gewichtsgemittelten Molekulargewicht von 60000 bis 150000 g/mol, bevorzugt 70000 bis 130000 g/mol, besonders bevorzugt 70 000 bis 90 000 g/mol enthält,

D) 0 bis 20 Gew.-Teile, bevorzugt 0 bis 16 Gew.-Teile, besonders bevorzugt 3 bis 16 Gew.-Teile (bezogen auf die Summe der Gewichtsteile der Komponenten A+B+C+D) eines oder mehrere Polymere ausgewählt aus der Gruppe bestehend aus kautschukfreiem Vinyl(Co)Polymerisat und Polyalkylenterephthalat,

E) 0 bis 50 Gew.-Teile, bevorzugt 0,5 bis 25 Gew.-Teile, besonders bevorzugt 0,5 bis 5 Gew.-Teile (jeweils bezogen

auf die Summe der Gewichtsteile der Komponenten A+B+C+D) Zusatzstoffe,

wobei die Zusammensetzung frei ist von Flammschutzmitteln, und
wobei alle Gewichtsteilangaben in der vorliegenden Anmeldung so normiert sind, dass die Summe der Gewichtsteile der Komponenten A+B+C+D in der Zusammensetzung 100 ergeben,
die oben genannte technische Aufgabe lösen.

**Komponente A**

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

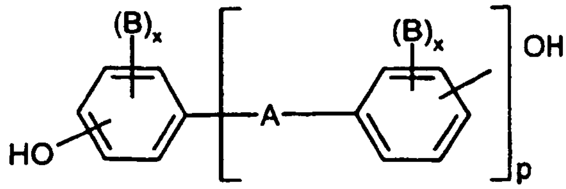

(I),

wobei

A eine Einfachbindung, $C_1$ bis $C_5$-Alkylen, $C_2$ bis $C_5$-Alkyliden, $C_5$ bis $C_6$-Cycloalkyliden, - O-, -SO-, -CO-, -S-, $-SO_2-$, $C_6$ bis $C_{12}$-Arylen, an das weitere aromatische gegebenenfalls Heteroatome enthaltende Ringe kondensiert sein können, oder ein Rest der Formel (II) oder (III)

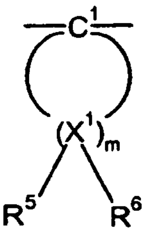

(II)

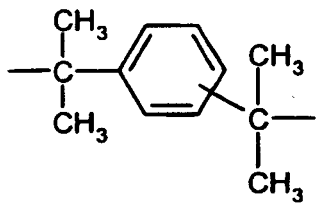

(III)

B jeweils $C_1$ bis $C_{12}$-Alkyl, vorzugsweise Methyl, Halogen, vorzugsweise Chlor und/oder Brom
x jeweils unabhängig voneinander 0, 1 oder 2,
p 1 oder 0 sind, und
$R^5$ und $R^6$ für jedes $X^1$ individuell wählbar, unabhängig voneinander Wasserstoff oder $C_1$ bis $C_6$-Alkyl, vorzugsweise

Wasserstoff, Methyl oder Ethyl,

$X^1$ Kohlenstoff und

m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate. Besonders bevorzugte Diphenole sind 4,4'-Dihydroxydiphenyl, Bisphenol-A, 2,4-Bis (4-hydroxy-phenyl)-2-methylbutan, 1,1-Bis-(4-hydroxyphenyl)-cyclohexan, 1,1-Bis-(4-hydroxyphenyl)-3,3,5-trimethylcyclohexan, 4,4'-Dihydroxydiphenylsulfid, 4,4'-Dihydroxydiphenylsulfon sowie deren di-und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A). Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Oc-tylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 mol-%mol-%, und 10 mol-%mol-%, bezogen auf die Molsumme der jeweils eingesetzten Diphenole.

Die thermoplastischen, aromatischen Polycarbonate haben mittlere Gewichtsmittelmolekulargewichte ($M_w$, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure. Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 mol-%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlörid, 3,3'-,4,4'-Benzophenon-tetracarbonsäuretetra-chlorid, 1,4,5,8-Napthalintetracarbon-säuretetrachlorid oder Pyromellithsäuretetrachlorid, in Mengen von 0,01 bis 1,0 mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis-(4-hydroxy-phe-nyl)-cyclohexyl]-propan, 2,4-Bis-(4-hydroxyphenyl-isopropyl)-phenol, Tetra-(4-hydroxyphenyl)-methan, 2,6-Bis-(2-hydroxy-5'-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis-[4',4"-dihydroxytriphenyl)-methyl]-benzol, in Mengen von 0,01 bis 1,0 mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol-%, insbesondere bis zu 80 mol-%, besonders bevorzugt bis zu 50 mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

**<u>Komponente B</u>**

Die Komponente B umfasst bevorzugt ein oder mehrere Pfropfpolymerisate von

B.1 5 bis 95 Gew.-%, vorzugsweise 10 bis 90 Gew.-%, insbesondere 10 bis 50 Gew.-% eines oder mehrerer Vinylmonomeren auf

B.2 95 bis 5 Gew.-%, vorzugsweise 90 bis 10 Gew.-%, insbesondere 50 bis 90 Gew.-% eines oder mehrerer Silikonacrylat- Komposit-Kautschuke als Pfropfgrundlage, wobei der Silikonacrylat-Kautschuk

B.2.1 65 bis 95 Gew.-%, bevorzugt 75 bis 95 Gew.-%, insbesondere 80 bis 95 Gew.-% Silikonkautschuk- und

B.2.2 5 bis 35 Gew.-%, bevorzugt 5 bis 25, insbesondere 5 bis 20 Gew.-% Polyalkyl(meth)acrylatkautschuk enthält,

wobei sich die beiden genannten Kautschuk-Komponenten B.2.1 und B.2.2 im Komposit-Kautschuk in bevorzugter Ausführungsform in solcher Art und Weise gegenseitig durchdringen, daß sie sich nicht wesentlich voneinander trennen lassen.

Die Pfropfcopolymerisate B werden durch radikalische Polymerisation, z.B. durch Emulsions-, Suspensions-, Lösungs- oder Massepolymerisation, vorzugsweise durch Emulsionspolymerisation hergestellt.

In bevorzugter Ausführungsform weisen die Pfropfpolymerisate eine Kern-Schale-Struktur mit einem Kautschukkern und einer Vinylpolymerharzschale auf.

Geeignete Monomere B.1 sind Vinylmonomere wie Vinylaromaten und/oder kernsubstituierte Vinylaromaten (wie Styrol, $\alpha$-Methylstyrol, p-Methylstyrol, p-Chlorstyrol), Methacrylsäure-($C_1$-$C_8$)-Alkylester (wie Methylmethacrylat, Ethylmethacrylat, 2-Ethylhexylmethacrylat, Allylmethacrylat), Acrylsäure-($C_1$-$C_8$)-Alkylester (wie Methylacrylat, Ethylacrylat, n-Butylacrylat, t-Butylacrylat), organische Säuren (wie Acrylsäure, Methacrylsäure), und/oder Vinylcyanide (wie Acrylnitril und Methacrylnitril), und/oder Derivate (wie Anhydride und Imide) ungesättigter Carbonsäuren (beispielsweise Maleinsäureanhydrid und N-Phenyl-Maleinimid). Diese Vinylmonomere können alleine oder in Mischungen von mindestens zwei Monomeren verwendet werden.

Bevorzugte Monomere B.1 sind ausgewählt aus mindestens einem der Monomere Styrol, $\alpha$-Methylstyrol, Methylmethacrylat, n-Butylacrylat und Acrylnitril. Besonders bevorzugt wird als Monomer B.1 eine Mischung aus Styrol und Acrylnitril oder aber Methylmethacrylat eingesetzt. In besonders bevorzugter Ausführungsform wir als Monomer B.1 Methylmethacrylat eingesetzt.

Die Glasübergangstemperatur der Pfropfgrundlage B.2 beträgt < 10°C, vorzugsweise < 0°C, besonders bevorzugt < -20°C. Die Pfropfgrundlage B.2 hat im Allgemeinen eine mittlere Teilchengröße ($d_{50}$-Wert) von 0,05 bis 10 $\mu$m, vorzugsweise 0,06 bis 1 $\mu$m, besonders bevorzugt 0,08 bis 0,5 $\mu$m, insbesondere 0,08 bis 0,25 $\mu$m.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid-Z. und Z. Polymere 250 (1972), 782-796) bestimmt werden.

Als Pfropfgrundlagen B.2 sind erfindungsgemäß hochsilikonhaltige Silikonacrylat-Kautschuke geeignet. Diese Silikonacrylat-Kautschuke sind Komposit-Kautschuke mit pfropfaktiven Stellen enthaltend 65 bis 95 Gew.-%, bevorzugt 75 bis 95 Gew.-%, insbesondere 80 bis 95 Gew.-% Silikonkautschuk-Anteil und 5 bis 35 Gew.-%, bevorzugt 5 bis 25, insbesondere 5 bis 20 Gew.-% Polyalkyl(meth)acrylatkautschuk-Anteil, wobei sich die beiden genannten Kautschuk-Komponenten im Komposit-Kautschuk in bevorzugter Ausführungsform in solcher Art und Weise gegenseitig durchdringen, daß sie sich nicht wesentlich voneinander trennen lassen.

Silikonacrylat-Kautschuke sind bekannt und beispielsweise beschrieben in US 5,807,914, EP 430134 und US 4888388.

Geeignete Silikonkautschuk-Komponenten der Silikonacrylat-Kautschuke sind Silikonkautschuke mit pfropfaktiven Stellen, deren Herstellungsmethode beispielsweise in US 2891920, US 3294725, DE-OS 3 631 540, EP 249964, EP 430134 und US 4888388 beschrieben wird.

Der Silikonkautschuk wird bevorzugt durch Emulsionspolymerisation hergestellt, bei der Siloxan-Monomerbausteine, Vernetzungs- oder Verzweigungsmittel (IV) und gegebenenfalls Pfropfmittel (V) eingesetzt werden.

Als Siloxan-Monomerbausteine werden beispielsweise und bevorzugt Dimethylsiloxan oder cyclische Organosiloxane mit wenigstens 3 Ringgliedern, vorzugsweise 3 bis 6 Ringgliedern, wie beispielsweise und bevorzugt Hexamethylcyclotrisiloxan, Octamethylcyclotetrasiloxan, Decamethylcyclopentasiloxan, Dodecamethylcyclohexasiloxan, Trimethyl-triphenyl-cyclotrisiloxane, Tetramethyl-tetraphenyl-cyclotetrasiloxane, Octaphenylcyclotetrasiloxan eingesetzt.

Die Organosiloxan-Monomere können allein oder in Form von Mischungen mit 2 oder mehr Monomeren eingesetzt werden. Der Silikonkautschuk enthält vorzugsweise nicht weniger als 50 Gew.-% und besonders bevorzugt nicht weniger als 60 Gew.-% Organosiloxan, bezogen auf das Gesamtgewicht der Silikonkautschuk-Komponente.

Als Vemetzungs- oder Verzweigungsmittel (IV) werden vorzugsweise silanbasierende Vernetzungsmittel mit einer Funktionalität von 3 oder 4, besonders bevorzugt 4, verwendet. Beispielhaft und vorzugsweise seien genannt: Trimethoxymethylsilan, Triethoxyphenylsilan, Tetramethoxysilan, Tetraethoxysilan, Tetra-n-propoxysilan und Tetrabutoxysilan. Das Vernetzungsmittel kann allein oder in Mischung von zwei oder mehreren eingesetzt werden. Besonders bevorzugt ist Tetraethoxysilan.

Das Vernetzungsmittel wird in einem Mengenbereich zwischen 0,1 und 40 Gew.-%, bezogen auf das Gesamtgewicht der Silikonkautschuk-Komponente, eingesetzt. Die Menge an Vernetzungsmittel wird so gewählt, dass der Quellungsgrad des Silikonkautschuks, gemessen in Toluol, zwischen 3 und 30 liegt, bevorzugt zwischen 3 und 25, und besonders bevorzugt zwischen 3 und 15. Der Quellungsgrad ist definiert als das Gewichtsverhältnis zwischen der Menge Toluol, die durch den Silikonkautschuk absorbiert wird, wenn er mit Toluol bei 25°C gesättigt wird, und der Menge an Silikonkautschuk im getrockneten Zustand. Die Ermittlung des Quellungsgrades ist im Detail in EP 249964 beschrieben.

Wenn der Quellungsgrad geringer als 3 ist, d.h. wenn der Gehalt an Vernetzungsmittel zu hoch ist, zeigt der Silikonkautschuk nicht ausreichend Kautschukelastizität. Wenn der Quellungsindex größer als 30 ist, kann der Silikonkautschuk keine Domänenstruktur im Matrixpolymer ausbilden und daher auch keine Schlagzähigkeit verbessern, der Effekt wäre dann ähnlich einer einfachen Zugabe von Polydimethylsiloxan.

Tetrafunktionelle Vernetzungsmittel sind bevorzugt gegenüber trifunktionellen, weil dann der Quellungsgrad einfacher kontrollierbarer innerhalb der oben beschriebenen Grenzen ist.

Als Pfropfmittel (V) geeignet sind Verbindungen, die fähig sind, Strukturen der folgenden Formeln zu bilden:

$$CH_2=C(R^2)\text{-}COO\text{-}(CH_2)_p\text{-}SiR^1_nO_{(3-n)/2} \qquad \text{(V-1)}$$

$$CH_2=CH\text{-}SiR^1_nO_{(3-n)/2} \qquad \text{(V-2)}$$

oder

$$HS\text{-}(CH_2)_p\text{-}SiR^1_nO_{(3-n)/2} \qquad \text{(V-3),}$$

wobei

- $R^1$ für $C_1$-$C_4$-Alkyl, vorzugsweise Methyl, Ethyl oder Propyl, oder Phenyl,
- $R^2$ für Wasserstoff oder Methyl stehen,
- n 0, 1 oder 2 und
- p eine ganze Zahl von 1 bis 6 bedeuten.

Acryloyl- oder Methacryloyloxysilane sind besonders geeignet, die o.g. Struktur (V-1) zu bilden, und haben eine hohe Pfropfeffizienz. Dadurch wird eine effektive Bildung der Pfropfketten gewährleistet, und somit die Schlagzähigkeit der resultierenden Harzzusammensetzung begünstigt.

Beispielhaft und bevorzugt seien genannt: β-Methacryloyloxy-ethyldimethoxymethyl-silan, γ-Methacryloyloxypropylmethoxydimethyl-silan, γ-Methacryloyloxy-propyldimethoxymethyl-silan, γ- Methacryloyloxy-propyltrimethoxysilan, γ-Methacryloyloxy-propylethoxydiethyl-silan, γ-Methacryloyloxy-propyldiethoxymethyl-silan, δ-Methacryloyl-oxybutyldiethoxymethyl-silane oder Mischungen hieraus.

Bevorzugt werden 0 bis 20 Gew.% Pfropfmittel bezogen auf das Gesamtgewicht des Silikonkautschuks eingesetzt.

Geeignete Polyalkyl(meth)acrylatkautschuk-Komponenten der Silikonacrylat-Kautschuke können hergestellt werden aus Methacrylsäurealkylestern und/oder Acrylsäurealkylestern, einem Vernetzungsmittel (VI) und einem Pfropfmittel (VII). Hierbei sind beispielhafte und bevorzugte Methacrylsäurealkylester und/oder Acrylsäurealkylester die $C_1$ bis $C_8$-Alkylester, beispielsweise Methyl-, Ethyl-, n-Butyl-, t-Butyl-, n-Propyl-, n-Hexyl-, n-Octyl-, n-Lauryl- und 2-Ethylhexylester; Halogenalkylester, vorzugsweise Halogen-$C_1$-$C_8$-alkylester, wie Chlorethylacrylat sowie Mischungen dieser Monomeren. Besonders bevorzugt ist n-Butylacrylat.

Als Vernetzungsmittel (VI) für die Polyalkyl(meth)acrylatkautschuk-Komponente des Silikonacrylat-Kautschuks können Monomere mit mehr als einer polymerisierbaren Doppelbindung eingesetzt werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Propylenglykoldimethacrylat, 1,3-Butylenglykoldimethacrylat und 1,4-Butylenglykoldimethacrylat. Die Vernetzungsmittel können alleine oder in Gemischen aus mindestsens zwei Vernetzungsmitteln verwendet werden.

Beispielhafte und bevorzugte Pfropfmittel (VII) sind Allylmethacrylat, Triallylcyanurat, Triallylisocyanurat oder Mischungen hieraus. Allylmethacrylat kann auch als Vernetzungsmittel (VI) eingesetzt werden. Die Pfropfmittel können alleine oder in Gemischen aus mindestens zwei Pfropfmitteln verwendet werden.

Die Menge an Vernetzungsmittel (VI) und Pfropfmittel (VII) beträgt 0,1 bis 20 Gew.%, bezogen auf das gesamte Gewicht der Polyalkyl(meth)acrylatkautschuk-Komponente des Silikonacrylat-Kautschuks.

Grundsätzlich kann der Silikonacrylat-Kautschuk sowohl durch Polymerisation des SilikonKautschuks in einem ersten Polymerisationsschritt und der Acrylatkautschukkomponente in einem zweiten Polymerisationsschritt als auch in umgekehrter Reihenfolge hergestellt werden.

Der Silikonacrylat-Kautschuk wird in bevorzugter Ausführungsform hergestellt, indem zunächst der Silikonkautschuk als wäßriger Latex hergestellt wird. Dabei kann der Silikonkautschuk durch Emulsionspolymerisation hergestellt werden, wie beispielsweise in US 2891920 und US 3294725 beschrieben. Dafür wird ein Gemisch enthaltend Organosiloxan, Vernetzungsmittel und gegebenenfalls Pfropfmittel unter Scherung mit Wasser vermischt, beispielsweise durch einen Homogenisator, in Gegenwart eines Emulgators bevorzugt auf Sulfonsäurebasis wie z.B. Alkylbenzolsulfonsäure oder Alkylsulfonsäure, wobei die Mischung zum Silikonkautschuklatex auspolymerisiert. Besonders geeignet ist eine Alkylbenzolsulfonsäure, da sie nicht nur als Emulgator, sondern auch als Polymerisationsinitiator wirkt. In diesem Fall ist eine Kombination der Sulfonsäure mit einem Metallsalz einer Alkylbenzolsulfonsäure oder mit einem Metallsalz einer Alkylsulfonsäure günstig, weil dadurch das Polymer während der späteren Pfropfpolymerisation stabilisiert wird.

Nach der Polymerisation wird die Reaktion beendet, indem die Reaktionsmischung durch Zugabe einer wässrigen alkalischen Lösung neutralisiert wird, z.B. durch Zugabe einer wässrigen Natriumhydroxid, Kaliumhydroxid oder Natriumcarbonat-Lösung.

Dieser Latex wird in der bevorzugten Ausführungsform anschließend mit den zu verwendenden Methacrylsäurealkylestern und/oder Acrylsäurealkylestern, dem Vernetzungsmittel (VI) und dem Pfropfmittel (VII) angereichert, und eine Polymerisation wird durchgeführt. Bevorzugt ist eine radikalisch initiierte Emulsionspolymerisation, beispielsweise durch einen Peroxid-, einen Azo- oder Redoxinitiator. Besonders bevorzugt ist die Verwendung eines Redoxinitiatorsystems, speziell eines Sulfoxylat-Initiatorsystems hergestellt durch Kombiniation von Eisensulfat, Dinatriumethylendiamintetraacetat, Rongalit und Hydroperoxid.

Das Pfropfmittel (V), das bei der Herstellung des Silikonkautschuks verwendet wird, führt dabei dazu, daß der Polyalkyl(meth)acrylatkautschuk-Anteil kovalent an den Silikonkautschuk-Anteil angebunden wird. Bei der Polymerisation durchdringen sich die beiden Kautschuk-Komponenten gegenseitig und bilden so den Komposit-Kautschuk, der sich nach der Polymerisation nicht mehr in seine Bestandteile aus Silikonkautschuk-Komponente und Polyalkyl(meth) acrylatkautschukKomponente trennen läßt.

Zur Herstellung der Silikonacrylat-Pfropfkautschuke B werden die Monomere B.1 auf die Kautschuk-Grundlage B.2. aufgepfropft.

Dabei können beispielsweise die in EP 249964, EP 430134 und US 4888388 beschriebenen Polymerisationsmethoden angewendet werden.

Beispielsweise erfolgt die Pfropfpolymerisation nach folgender Polymerisationsmethode: In einer ein- oder mehrstufigen radikalisch initiieren. Emulsionspolymerisation werden die gewünschten Vinylmonomere B.1 auf die Pfropfgrundlage, die als wässriger Latex vorliegt, aufpolymerisiert. Die Pfropfeffizienz soll dabei möglichst hoch sein und beträgt bevorzugt größer oder gleich 10%. Die Pfropfeffizienz hängt maßgeblich vom verwendeten Pfropfmittel (V) bzw. (VII) ab. Nach der Polymerisation zum Silikonacrylat-Pfropfkautschuk wird der wässrige Latex beispielsweise in heißes Wasser gegeben, in dem zuvor Metallsalze gelöst wurden, wie z.B. Calciumchlorid oder Magnesiumsulfat. Dabei koaguliert der Silikonacrylat-Pfropfkautschuk und kann anschließend separiert und gegebenenfalls in bevorzugter Ausführungsform gewaschen werden.

Komponente C

Bei der Komponente C handelt es sich um ein oder mehrere Pfropfpolymerisate von

C.1) 5 bis 95 Gew.-%, vorzugsweise 30 bis 90 Gew.-%, besonders bevorzugt 80 bis 90 Gew.-%, insbesondere 85 bis 90 Gew.-% bezogen auf die Komponente C einer Mischung aus

C.1.1) 65 bis 85 Gew.-%, bevorzugt 70 bis 80 Gew.-% bezogen auf C.1 mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und Methacrylsäure-($C_1$-$C_8$)-Alkylester (wie beispielsweise Methylmethacrylat, Ethylmethacrylat) und

C.1.2) 15 bis 35 Gew.-%, bevorzugt 20 bis 30 Gew.-% bezogen auf C.1 mindestens eines Monomeren ausgewählt aus der Gruppe der Vinylcyanide (wie beispielsweise ungesättigte Nitrile wie Acrylnitril und Methacrylnitril), (Meth)Acrylsäure-($C_1$-$C_8$)-Alkylester (wie beispielsweise Methylmethacrylat, n-Butylacrylat, tert.-Butylacrylat) und Derivate (wie beispielsweise Anhydride und Imide) ungesättigter Carbonsäuren (beispielsweise Maleinsäureanhydrid und N-Phenyl-Maleinimid)
auf
C.2) 95 bis 5 Gew.-%, vorzugsweise 70 bis 10 Gew.-%, besonders bevorzugt 20 bis 10 Gew.-%, insbesondere 15 bis 10 Gew.-% wenigstens einer Pfropfgrundlage mit einer Glasübergangstemperatur < 0°C, bevorzugt < -20°C, wobei die Pfropfgrundlage C.2) im allgemeinen eine mittlere Teilchengröße ($d_{50}$-Wert) von 0,05 bis 10 μm, vorzugsweise 0,1 bis 5 μm, besonders bevorzugt 0,15 bis 2 μm, insbesondere von 0,5 bis 1,5 μm aufweist.

Die mittlere Teilchengröße $d_{50}$ ist der Durchmesser, oberhalb und unterhalb dessen jeweils 50 Gew.% der Teilchen liegen. Er kann mittels Ultrazentrifugenmessung (W. Scholtan, H. Lange, Kolloid, Z. und Z. Polymere 250 (1972), 782-1796) bestimmt werden.

Bevorzugte Monomere C.1.1 sind ausgewählt aus mindestens einem der Monomere Styrol, α-Methylstyrol und Methylmethacrylat, bevorzugte Monomere C.1.2 sind ausgewählt aus mindestens einem der Monomere Acrylnitril, Maleinsäureanhydrid und Methylmethacrylat.
Besonders bevorzugte Monomere sind C.1.1 Styrol und C.1.2 Acrylnitril.

Für die Pfropfpolymerisate C geeignete Pfropfgrundlagen C.2 sind beispielsweise Dienkautschuke, Dien-Vinyl-Blockcopolymer-Kautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Mischungen aus solchen Kautschuken mit Ausnahme von Silikon-Acrylat-(Komposit-)kautschuken.

Bevorzugte Pfropfgrundlagen C.2 sind Dienkautschuke ausgewählt aus mindestens einem Dienkautschuk der Gruppe bestehend aus Butadienkautschuk, Isoprenkautschuk, Copolymerisate von Dienkautschuken, Copolymerisate von Butadienkautschuk und weiteren copolymerisierbaren Monomeren (z.B. gemäß C.1.1 und C.1.2) und Copolymerisate von Isoprenkautschuk. und weiteren copolymerisierbaren Monomeren (z.B. gemäß C.1.1 und C.1.2). Besonders bevorzugt sind reiner Polybutadienkautschuk und Styrol-Butadien-Blockcopolymerkautschuk.

Der Gelanteil der Pfropfpolymerisate beträgt mindestens 15 Gew.%, bevorzugt mindestens 20 Gew.-%, besonders bevorzugt 20 bis 40 Gew.-% (gemessen in Aceton). Der Gelgehalt der Pfropfpolymerisate wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Besonders bevorzugte Polymerisate C sind z.B. ABS-Polymerisate hergestellt durch radikalische Polymerisation (Emulsions-, Masse-, Lösungs- und Suspensions-ABS), wie sie z. B. in der DE-A 2 035 390 (=US-PS 3 644 574) oder in der DE-A 2 248 242 (=GB-PS 1 409 275) bzw. in Ullmanns, Enzyklopädie der Technischen Chemie, Bd. 19 (1980), S. 280 ff. beschrieben sind. Insbesondere bevorzugte Polymerisate C sind ABS-Polymerisate hergestellt in Masse-, Lösungs- oder Suspensions-Polymerisation.

Das Pfropfpolymerisat C umfaßt freies, d.h. nicht chemisch an die Kautschukgrundlage gebundenes Copolymerisat aus C.1.1 und C.1.2, welches sich dadurch auszeichnet, dass es in geeigneten Lösungsmittel (z.B. Aceton) gelöst werden kann.

Bevorzugt enthält die Komponente C ein freies Copolymerisat aus C.1.1 und C.1.2, welches ein gewichtsgemitteltes Molekulargewicht (Mw), bestimmt per Gelpermeationschromatographie, von 60000 bis 150000 g/mol, bevorzugt von 70000 bis 130000 g/mol, besonders bevorzugt 70000 bis 90000 g/mol aufweist.

**Komponente D**

Die Komponente D umfasst ein oder mehrere thermoplastische Vinyl(Co)Polymerisate D.1 und/oder Polyalkylenterephthalate D.2.

Geeignet sind als Vinyl(Co)Polymerisate D.1 Polymerisate von mindestens einem Monomeren aus der Gruppe der Vinylaromaten, Vinylcyanide (ungesättigte Nitrile), (Meth)Acrylsäure-($C_1$-$C_8$)-Alkylester, ungesättigte Carbonsäuren sowie Derivate (wie Anhydride und Imide) ungesättigter Carbonsäuren. Insbesondere geeignet sind (Co)Polymerisate aus

D.1.1 50 bis 99, vorzugsweise 60 bis 80 Gew.-Teilen, insbesondere 70 bis 80 Gew.-Teilen Vinylaromaten und/oder kernsubstituierten Vinylaromaten wie Styrol, α-Methylstyrol, p-Methylstyrol, p-Chlorstyrol) und/oder (Meth) Acrylsäure-($C_1$-$C_8$)-Alkylester, wie Methyl-methacrylat, Ethylmethacrylat), und

D.1.2 1 bis 50, vorzugsweise 20 bis 40 Gew.-Teilen, insbesondere 20 bis 30 Gew.-Teilen Vinylcyanide (ungesättigte Nitrile) wie Acrylnitril und Methacrylnitril und/oder (Meth)Acrylsäure-($C_1$-$C_8$)-Alkylester, wie Methylmethacrylat, n-Butylacrylat, t-Butyl-acrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate D.1 sind harzartig, thermoplastisch und kautschukfrei. Besonders bevorzugt ist das Copolymerisat aus D.1.1 Styrol und D.1.2 Acrylnitril.

Die (Co)Polymerisate gemäß D.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000, besonders bevorzugt zwischen 60000 bis 150000 g/mol, insbesondere zwischen 70000 bis 130000 g/mol.

Die Polyalkylenterephthalate der Komponente D.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew-%, bezogen auf die Diolkomponente Ethylenglykol- und/oder Butandiol-1,4-Reste.

Die bevorzugten Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Propandiol-1,3- bzw. Butandiol-1,4-resten bis zu 20 Mol.-% anderer aliphatischer Diole mit 3 bis 12 C-Atomen oder cycloaliphatischer Diole mit 6 bis 21 C-Atomen enthalten, z.B. Reste von 1,3-Propandiol, 2-Ethylpropan-1,3-diol, Neopentylglykol, 1,5-Pentan-diol, 1,6-Hexandiol, Cyclohexan-1,4-dimethanol, 3-Methylpentan-2,4-diol, 2-Methylpentan-2,4-diol, 2,2,4-Trimethylpentan-1,3-diol und 2-Ethylhexan-1,6-diol, 2,2-Diethylpröpan-1,3-diol, 2,5-Hexandiol, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-A 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

**<u>Komponente E</u>**

Die Zusammensetzung kann weitere handelsübliche Zusatzstoffe gemäß Komponente E wie Gleit- und Entformungsmittel (beispielsweise Pentaerythrittetrastearat), Nukleiermittel, Stabilisatoren, Antistatika (beispielsweise

Leitruße, Carbonfasern, Carbon Nanotubes sowie organische Antistatika wie Polyalkylenether, Alkyl-Sulfonate oder Polyamid-haltige Polymere), Säuren, Füll- und Verstärkungsstoffe (beispielsweise Glas- oder Karbonfasern, Glimmer, Kaolin, Talk, $CaCO_3$ und Glasschuppen) sowie Farbstoffe und Pigmente enthalten.

**Herstellung der Formmassen und Formkörper**

Die erfindungsgemäßen thermoplastischen Formmassen werden hergestellt, indem man die jeweiligen Bestandteile in bekannter Weise vermischt und bei Temperaturen von 220°C bis 320°C, bevorzugt bei 240°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung sind ebenfalls Verfahren zur Herstellung der Formmassen und die Verwendung der Formmassen zur Herstellung von Formkörpern sowie die Formteile selbst.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Fernsehgeräte, Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karosserie- bzw. Innenbauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen und für Fernsehgeräte, wärmeisolierte Transportbehältnisse, Formteile für Sanitär- und Badausrüstungen, Abdeckgitter für Lüfteröffnungen und Gehäuse für Gartengeräte.

Die folgenden Beispiele dienen der weiteren Erläuterung der Erfindung.

**Beispiele**

Komponente A

Unverzweigtes Polycarbonat auf Basis Bisphenol A mit einer relativen Lösungsviskosität von $\eta_{rel}$ = 1,28, gemessen in $CH_2Cl_2$ als Lösungsmittel bei 25°C und bei einer Konzentration von 0,5 g/100 ml.

Komponente B-1

Schlagzähmodifikator, Pfropfpolymerisat von

B-1.1 11 Gew.-% Methylmethacrylat auf

B-1.2 89 Gew.-% eines Silikonacrylat-Komposit-Kautschukes als Pfropfgrundlage, wobei der Silikonacrylat-Kautschuk

B-1.2.1 92 Gew.-% Silikonkautschuk und

B-1.2.2 8 Gew.-% Polybutylacrylatkautschuk enthält, und

wobei sich die beiden genannten Kautschuk-Komponenten B-1.2.1 und B-1.2.2 im Komposit-Kautschuk gegenseitig durchdringen, so daß sie sich nicht wesentlich voneinander trennen lassen.

Komponente B-2

Schlagzähmodifikator, Pfropfpolymerisat von

B-2.1 17 Gew.-% Methylmethacrylat auf

B-2.2 83 Gew.-% eines Silikonacrylat-Komposit-Kautschukes als Pfropfgrundlage, wobei der Silikonacrylat-Kautschuk

B-2.2.1 11 Gew.-% Silikonkautschuk und

B-2.2.2 89 Gew.-% Polybutylacrylatkautschuk enthält, und

wobei sich die beiden genannten Kautschuk-Komponenten B-2.2.1 und B-2.2.2 im Komposit-Kautschuk gegenseitig durchdringen, so daß sie sich nicht wesentlich voneinander trennen lassen.

Komponente C-1

ABS-Polymerisat hergestellt durch Masse-Polymerisation von 82 Gew.-% bezogen auf das ABS-Polymerisat einer Mischung aus 24 Gew.-% Acrylnitril und 76 Gew.-% Styrol in Gegenwart von 18 Gew.-% bezogen auf das ABS-Polymerisat eines Polybutadien-Styrol-Blockcopolymerkautschuks mit einem Styrolgehalt von 26 Gew.-%. Das gewichtsgemittelte Molekulargewicht $M_w$ des freien SAN-Copolymeranteils im ABS-Polymerisat beträgt 80000 g/mol (gemessen per GPC in THF). Der Gelgehalt des ABS-Polymerisats beträgt 24 Gew.-% (gemessen in Aceton).

Komponente C-2

ABS-Polymerisat hergestellt durch Masse-Polymerisation, wobei das Gewichtsverhältnis von Acrylnitril:Butadien:Styrol 20:16:64 entspricht. Das gewichtsgemittelte Molekulargewicht $M_w$ des freien SAN-Copolymeranteils im ABS-Polymerisat beträgt 168000 g/mol (gemessen per GPC in THF). Der Gelgehalt des ABS-Polymerisats beträgt 30 Gew.-% (gemessen in Aceton).

Komponente D

Copolymerisat aus 77 Gew.-% Styrol und 23 Gew.-% Acrylnitril mit einem gewichtsgemittelten Molekulargewicht $M_w$ von 130 kg/mol (bestimmt durch GPC), hergestellt nach dem Masseverfahren.

Komponente E

Komponente E-1: Pentaerythrittetrastearat
Komponente E-2: Irganox® B900 (Hersteller: Ciba Specialty Chemicals Inc., Basel, Schweiz)

**Herstellung und Prüfung der Formmassen**

Auf einem Zweischneckenextruder (ZSK-25) (Fa. Werner und Pfleiderer) werden die in den Tabellen 1-2 aufgeführten Einsatzstoffe bei einer Drehzahl von 225 Upm und mit einem Durchsatz von 20 kg/h bei einer Maschinentemperatur von 260°C compoundiert und granuliert.

Die fertigen Granulate werden auf einer Spritzgussmaschine zu den entsprechenden Probekörpern verarbeitet (Massetemperatur 260°C, Werkzeugtemperatur 80°C, Fließfrontgeschwindigkeit 240 mm/s). Die Charakterisierung erfolgt gemäß DIN EN ISO 527 (Reißdehnung bestimmt im Zugversuch), ISO 11443 (Schmelzeviskosität bei 260°C und einer Scherrate von 1000 $s^{-1}$) und DIN EN ISO 1133 (Schmelze-Volumen-Fließrate, melt volume-flow rate MVR bei 260°C und einer Stempellast von 5 kg).

Als Maß für die Hydrolysebeständigkeit der hergestellten Zusammensetzungen dient die Änderung des MVR gemessen nach ISO 1133 bei 260°C mit einer Stempellast von 5 kg bei einer 7-tägigen Lagerung des Granulats bei 95°C und 100% relativer Luftfeuchte ("FWL-Lagerung"). Dabei wird der Anstieg des MVR-Wertes gegenüber dem MVR-Wert vor der entsprechenden Lagerung als ΔMVR(hydr.), welcher sich durch nachstehende Formel definiert, berechnet.

$$\Delta MVR(hydr.) = \frac{MVR(nach\,FWL-Lagerung) - MVR(vor\,Lagerung)}{MVR(vor\,Lagerung)} \bullet 100\%$$

Aus Tabelle 1 ist ersichtlich, dass die erfindungsgemäßen Zusammensetzungen der erfindungsgemäßen Beispiele 1 und 3 eine höhere Hydrolysestabilität, eine höhere Reißdehnung und eine niedrigere Schmelzeviskosität aufweisen gegenüber den Zusammensetzungen der Vergleichsbeispiele.

Tabelle 1: Zusammensetzungen und ihre Eigenschaften

| Komponenten (Gew.-Teile) | | **1** | **2 (Vgl.)** | **3** | **4 (Vgl.)** |
|---|---|---|---|---|---|
| A | | 70,1 | 70,1 | 70,1 | 70,1 |
| B-1 | | 10,8 | | 6,0 | |
| B-2 | | | 10,8 | | 6,0 |
| C-1 | | 6,0 | 6,0 | 10,8 | 10,8 |
| D | | 13,1 | 13,1 | 13,1 | 13,1 |
| E-1 | | 0,8 | 0,8 | 0,8 | 0,8 |
| E-2 | | 0,1 | 0,1 | 0,1 | 0,1 |
| Eigenschaften | | | | | |
| Schmelzeviskosität 260°C [ 1000 s-1] | Pa.s | 204 | 262 | 207 | 238 |
| MVR 260°C/5 kg | $cm^3$/10min. | 15 | 14 | 20 | 17 |
| Reißdehnung | % | 134 | 113 | 128 | 115 |
| ΔMVR (hydr.) | % | 7 | 200 | 15 | 71 |

Das ABS-Polymerisat C-2 enthält freies, d.h. nicht an den Kautschuk gebundenes Copolymer mit einer höheren Molmasse als beim erfindungsgemäßen ABS-Polymerisat C-1. Aus Tabelle 2 ist ersichtlich, dass die Zusammensetzungen enthaltend die erfindungsgemäße Komponente C-1 (Beispiele 5 und 7) eine höhere Hydrolysestabilität, eine höhere Reißdehnung und eine niedrigere Schmelzeviskosität aufweisen gegenüber den Zusammensetzungen der Vergleichsbeispiele **6** und **8** enthaltend Komponente C-2.

Tabelle 2: Zusammensetzungen und ihre Eigenschaften

| Komponenten (Gew.-Teile) | | **5** | **6 (Vgl.)** | **7** | **8 (Vgl.)** |
|---|---|---|---|---|---|
| A | | 67,1 | 67,1 | 65,8 | 65,8 |
| B-1 | | 4,6 | 4,6 | 4,6 | 4,6 |
| C-1 | | 13,2 | | 24,6 | |
| C-2 | | | 13,2 | | 24,6 |
| D | | 15,2 | 15,2 | 5,1 | 5,1 |
| E-1 | | 0,8 | 0,8 | 0,8 | 0,8 |
| E-2 | | 0,1 | 0,1 | 0,1 | 0,1 |
| Eigenschaften | | | | | |
| Schmelzeviskosität 260°C [ 1000 s-1] | Pa.s | 193 | 198 | 194 | 216 |
| MVR 260°C/5 kg | $cm^3$/10min. | 24 | 22 | 25 | 21 |
| Reißdehnung | % | 121 | 114 | 120 | 120 |
| ΔMVR (hydr.) | % | 5 | 6 | 10 | 13 |

## Patentansprüche

**1.** Zusammensetzungen enthaltend

A) 60 bis 80 Gew.-Teile (jeweils bezogen auf die Summe der Gewichtsteile der Komponenten A+B+C+D) aromatisches Polycarbonat und/oder aromatisches Polyestercarbonat,
B) 8 bis 13 Gew.-Teile (jeweils bezogen auf die Summe der Gewichtsteile der Komponenten A+B+C+D) eines

ersten Pfropfpolymerisat, **dadurch gekennzeichnet, dass** die Pfropfgrundlage ein Silikonacrylat-Komposit-Kautschuk aus Silikonkautschuk und Polyalkyl(meth)acrylatkautschuk ist, wobei der Anteil an Silikonkautschuk 65 - 95 Gew.-% (bezogen auf die Pfropfgrundlage) beträgt,
C) 3 bis 7 Gew.-Teile (jeweils bezogen auf die Summe der Gewichtsteile der Komponenten A+B+C+D) eines zweiten Pfropfpolymerisats, welches freies, d.h. nicht chemisch an den Kautschuk gebundenes Copolymer mit einem gewichtsgemittelten Molekulargewicht von 60000 bis 150000 g/mol enthält, und
D) 0 bis 20 Gew.-Teile (bezogen auf die Summe der Gewichtsteile der Komponenten A+B+C+D) eines oder mehrere Polymere ausgewählt aus der Gruppe bestehend aus kautschukfreiem Vinyl(Co)Polymerisat und Polyalkylenterephthalat,
wobei die Zusammensetzung frei ist von Flammschutzmitteln.

2. Zusammensetzung gemäß Anspruch 1 enthaltend als Komponente B ein Pfropfpolymerisat von

B.1 5 bis 95 Gew.-% eines oder mehrerer Vinylmonomeren auf
B.2 95 bis 5 Gew.-% eines oder mehrerer Silikonacrylat-Komposit-Kautschuke als Pfropfgrundlage, wobei der Silikonacrylat-Kautschuk
B.2.1 65 - 95 Gew.-% Silikonkautschuk und
B.2.2 35 bis 5 Gew.-% Polyalkyl(meth)acrylatkautschuk enthält,

wobei sich die beiden genannten Kautschuk-Komponenten B.2.1 und B.2.2 im Komposit-Kautschuk auf solche Art und Weise gegenseitig durchdringen, daß sie sich nicht wesentlich voneinander trennen lassen.

3. Zusammensetzung gemäß Anspruch 2, wobei die Vinylmonomere B.1 ausgewählt sind aus mindestens einem der Gruppe bestehend aus Styrol, $\alpha$-Methylstyrol, Methylmethacrylat, n-Butylacrylat und Acrylnitril.

4. Zusammensetzung gemäß Anspruch 1 enthaltend als Komponente C ein Pfropfpolymerisat von

C.1) 5 bis 95 Gew.-% bezogen auf die Komponente C einer Mischung aus
C.1.1) 65 bis 85 Gew.-% bezogen auf C.1 mindestens eines Monomeren ausgewählt aus der Gruppe der Vinylaromaten, kernsubstituierten Vinylaromaten und Methacrylsäure-($C_1$-$C_8$)-Alkylester und
C.1.2) 15 bis 35 Gew.-% bezogen auf C.1 mindestens eines Monomeren ausgewählt aus der Gruppe der Vinylcyanide, (Meth)Acrylsäure-($C_1$-$C_8$)-Alkylester und Derivate ungesättigter Carbonsäuren

auf

C.2) 95 bis 5 Gew.-% wenigstens einer Pfropfgrundlage mit einer Glasübergangstemperatur < 0°C, wobei die Pfropfgrundlage C.2) eine mittlere Teilchengröße ($d_{50}$-Wert) von 0,05 bis 10 $\mu$m aufweist.

5. Zusammensetzung gemäß Anspruch 4, wobei die Pfropfgrundlage C.2 ausgewählt sind aus der Gruppe bestehend aus Dienkautschuke, Dien-Vinyl-Blockcopolymer-Kautschuke, Ethylen/Propylen-Kautschuke, Ethylen/Propylen/Dien-Kautschuke, Acrylat-, Polyurethan-, Silikon-, Chloropren- und Ethylen/Vinylacetat-Kautschuke, mit Ausnahme von Mischungen enthaltend Silikon- und Acrylatkautschuken.

6. Zusammensetzung gemäß Anspruch 1 enthaltend als Komponente C ein Pfropfpolymerisat, welches freies, d.h. nicht chemisch an den Kautschuk gebundenes Copolymer mit einem gewichtsgemittelten Molekulargewicht von 70 000 bis 90 000 g/mol enthält

7. Zusammensetzung gemäß Anspruch 4 enthaltend als Komponente C ein Pfropfpolymerisat hergestellt im Masse-, Lösungs- oder Masse-Suspensions-Polymerisationsverfahren, das einen Kautschukgehalt (Anteil der Komponente C.2 am Pfropfpolymerisat C) von 10 bis 20 Gew.-% aufweist sowie eine Pfropfhülle, die jeweils bezogen auf die Monomere der Pfropfhülle 20 bis 30 Gew.-% mindestens eines der Monomeren gemäß C.1.2 und 70 bis 80 Gew.-% mindestens eines der Monomeren gemäß C.1.1 enthält.

8. Zusammensetzung gemäß Anspruch 1 enthaltend als Komponente D 3 bis 16 Gew.-Teile (bezogen auf die Summe der Gewichtsteile der Komponenten A+B+C+D) eines oder mehrere Polymere ausgewählt aus der Gruppe bestehend aus kautschukfreies Vinyl(Co)Polymerisat D.1 und Polyalkylenterephthalat D.2.

**9.** Zusammensetzung gemäß Anspruch 1 enthaltend 0 bis 50 Gew.-Teile (jeweils bezogen auf die Summe der Gewichtsteile der Komponenten A+B+C+D) eines oder mehrerer Zusatzstoffe ausgewählt aus der Gruppe bestehend aus Gleit- und Entformungsmittel, Nukleiermittel, Stabilisatoren, Antistatika, Säuren, Füll- und Verstärkungsstoffe sowie Farbstoffe und Pigmente.

**10.** Zusammensetzungen nach Anspruch 1 bestehend aus

A) 60 bis 88 Gew.-Teile (jeweils bezogen auf die Summe der Gewichtsteile der Komponenten A+B+C+D) aromatisches Polycarbonat und/oder aromatisches Polyestercarbonat,
B) 8 bis 13 Gew.-Teile (jeweils bezogen auf die Summe der Gewichtsteile der Komponenten A+B+C+D) eines ersten Pfropfpolymerisats, **dadurch gekennzeichnet, dass** die Pfropfgrundlage ein Silikonacrylat-Komposit-Kautschuk aus sich gegenseitig durchdringendem Silikonkautschuk- und Polyalkyl(meth)acrylatkautschuk ist, wobei der Anteil an Silikonkautschuk 65 bis 95 Gew.-% (bezogen auf die Pfropfgrundlage) beträgt,
C) 3 bis 7 Gew.-Teile (bezogen auf die Summe der Gewichtsteile der Komponenten A+B+C+D) eines zweiten Pfropfpolymerisats, welches freies, d.h. nicht chemisch an den Kautschuk gebundenes Copolymer mit einem gewichtsgemittelten Molekulargewicht von 60000 bis 150000 g/mol enthält,
D) 3 bis 16 Gew.-Teile (bezogen auf die Summe der Gewichtsteile der Komponenten A+B+C+D) eines oder mehrere Polymere ausgewählt aus der Gruppe bestehend aus kautschukfreies Vinyl(Co)Polymerisat und Polyalkylenterephthalat, und
E) 0,5 bis 25 Gew.-Teile (jeweils bezogen auf die Summe der Gewichtsteile der Komponenten A+B+C+D) eines oder mehrerer Zusatzstoffe ausgewählt aus der Gruppe bestehend aus Gleit- und Entformungsmittel, Nukleiermittel, Stabilisatoren, Antistatika, Säuren, Füll- und Verstärkungsstoffe sowie Farbstoffe und Pigmente.

**11.** Zusammensetzungen gemäß Anspruch 10, wobei der Anteil der Komponente B 8 bis 13 Gew.-Teile (bezogen auf die Summe der Gewichtsteile der Komponenten A+B+C+D) beträgt, und der Anteil Komponente C 3 bis 7 Gew.-Teile (bezogen auf die Summe der Gewichtsteile der Komponenten A+B+C+D) beträgt.

**12.** Verwendung der Zusammensetzungen gemäß Anspruch 1 zur Herstellung von Formkörpern.

**13.** Formkörper, enthaltend eine Zusammensetzung nach einem der Ansprüche 1 bis 11.

**14.** Formkörper nach Anspruch 13 **dadurch gekennzeichnet, dass** der Formkörper ein Teil eines Kraftfahrzeugs, Schienenfahrzeugs, Luftfahrzeugs oder Wasserfahrzeugs oder Folien, Profile oder Gehäuseteile jeder Art ist.

## Claims

**1.** Compositions comprising

A) from 60 to 80 parts by weight (based in each case on the total of the parts by weight of components A + B + C + D) of aromatic polycarbonate and/or aromatic polyester carbonate,
B) from 8 to 13 parts by weight (based in each case on the total of the parts by weight of components A + B + C + D) of a first graft polymer, **characterized in that** the graft base is a silicone-acrylate composite rubber made of silicone rubber and polyalkyl (meth)acrylate rubber, where the proportion of silicone rubber is from 65 to 95% by weight (based on the graft base),
C) from 3 to 7 parts by weight (based in each case on the total of the parts by weight of components A + B + C + D) of a second graft polymer which comprises free copolymer, i.e. copolymer not chemically bonded to the rubber, with a weight-average molar mass of from 60 000 to 150 000 g/mol, and
D) from 0 to 20 parts by weight (based on the total of the parts by weight of components A + B + C + D) of one or more polymers selected from the group consisting of rubber-free vinyl (co)polymer and polyalkylene terephthalate, where the composition is free from flame retardants.

**2.** Composition according to Claim 1 comprising, as component B, a graft polymer of

B.1 from 5 to 95% by weight of one or more vinyl monomers on

B.2 from 95 to 5% by weight of one or more silicone-acrylate composite rubbers as graft base, where the silicone-acrylate rubber comprises
B.2.1 from 65 to 95% by weight of silicone rubber and
B.2.2 from 35 to 5% by weight of polyalkyl (meth)acrylate rubber,

where the two rubber components B.2.1 and B.2.2 mentioned penetrate into one another in the composite rubber in a manner that prevents any substantial separation of these from one another.

**3.** Composition according to Claim 2, where the vinyl monomers B.1 have been selected from at least one of the group consisting of styrene, $\alpha$-methylstyrene, methyl methacrylate, n-butyl acrylate and acrylonitrile.

**4.** Composition according to Claim 1 comprising, as component C, a graft polymer of

C.1) from 5 to 95% by weight, based on component C, of a mixture of
C.1.1) from 65 to 85% by weight, based on C.1, of at least one monomer selected from the group of the vinylaromatics, ring-substituted vinylaromatics and $C_1$-$C_8$-alkyl methacrylates and
C.1.2) from 15 to 35% by weight, based on C.1, of at least one monomer selected from the group of the vinyl cyanides, $C_1$-$C_8$-alkyl (meth)acrylates and derivatives of unsaturated carboxylic acids

on

C.2) from 95 to 5% by weight of at least one graft base with a glass transition temperature < 0°C, where the graft base C.2) has a median particle size ($d_{50}$ value) of from 0.05 to 10 $\mu$m.

**5.** Composition according to Claim 4, where the graft base C.2 has been selected from the group consisting of diene rubbers, diene-vinyl block copolymer rubbers, ethylene/propylene rubbers, ethylene/propylene/diene rubbers, acrylate rubbers, polyurethane rubbers, silicone rubbers, chloroprene rubbers and ethylene/vinyl acetate rubbers, with the exception of mixtures comprising silicone rubbers and acrylate rubbers.

**6.** Composition according to Claim 1 comprising, as component C, a graft polymer which comprises free copolymer, i.e. copolymer not chemically bonded to the rubber, with a weight-average molar mass of from 70 000 to 90 000 g/mol.

**7.** Composition according to Claim 4 comprising, as component C, a graft polymer produced by the bulk, solution or bulk-suspension polymerization process which has from 10 to 20% by weight rubber content (proportion of component C.2 in the graft polymer C) and a graft shell which comprises, based in each case on the monomers of the graft shell, from 20 to 30% by weight of at least one of the monomers according to C.1.2 and from 70 to 80% by weight of at least one of the monomers according to C.1.1.

**8.** Composition according to Claim 1 comprising, as component D, from 3 to 16 parts by weight (based on the total of the parts by weight of components A + B + C + D) of one or more polymers selected from the group consisting of rubber-free vinyl(co)polymer D.1 and polyalkylene terephthalate D.2.

**9.** Composition according to Claim 1 comprising from 0 to 50 parts by weight (based in each case on the total of the parts by weight of components A + B + C + D) of one or more additional substances selected from the group consisting of lubricant and mould-release agent, nucleating agent, stabilizers, antistatic agents, acids, fillers and reinforcing materials and dyes and pigments.

**10.** Compositions according to Claim 1 composed of

A) from 60 to 80 parts by weight (based in each case on the total of the parts by weight of components A + B + C + D) of aromatic polycarbonate and/or aromatic polyester carbonate,
B) from 8 to 13 parts by weight (based in each case on the total of the parts by weight of components A + B + C + D) of a first graft polymer, **characterized in that** the graft base is a silicone-acrylate composite rubber made of silicone rubber and polyalkyl (meth)acrylate rubber which penetrate into one another, where the proportion of silicone rubber is from 65 to 95% by weight (based on the graft base),
C) from 3 to 7 parts by weight (based on the total of the parts by weight of components A + B + C + D) of a second graft polymer which comprises free copolymer, i.e. copolymer not chemically bonded to the rubber, with a weight-average molar mass of from 60 000 to 150 000 g/mol,

D) from 3 to 16 parts by weight (based on the total of the parts by weight of components A + B + C + D) of one or more polymers selected from the group consisting of rubber-free vinyl (co)polymer and polyalkylene terephthalate, and E) from 0.5 to 25 parts by weight (based in each case on the total of the parts by weight of components A + B + C + D) of one or more additional substances selected from the group consisting of lubricant and mould-release agent, nucleating agent, stabilizers, antistatic agents, acids, fillers and reinforcing materials and dyes and pigments.

**11.** Compositions according to Claim 10, where the proportion of component B is from 8 to 13 parts by weight (based on the total of the parts by weight of components A + B + C + D), and the proportion of component C is from 3 to 7 parts by weight (based on the total of the parts by weight of components A + B + C + D).

**12.** Use of the compositions according to Claim 1 for producing mouldings.

**13.** Moulding comprising a composition according to any of Claims 1 to 11.

**14.** Moulding according to Claim 13, **characterized in that** the moulding is a part of a motor vehicle, of a rail vehicle, of an aircraft or of a watercraft or foils, profiles or housing parts of any type.

## Revendications

**1.** Compositions contenant

A) 60 à 80 parties en poids (à chaque fois par rapport à la somme des parties en poids des composants A + B + C + D) de polycarbonate aromatique et/ou de polyestercarbonate aromatique,
B) 8 à 13 parties en poids (à chaque fois par rapport à la somme des parties en poids des composants A + B + C + D) d'un premier polymère greffé, **caractérisé en ce que** la base de greffage est un caoutchouc composite de silicone-acrylate constitué de caoutchouc de silicone et de caoutchouc de poly((méth)acrylate d'alkyle), la proportion de caoutchouc de silicone valant 65-95% en poids (par rapport à la base de greffage),
C) 3 à 7 parties en poids (à chaque fois par rapport à la somme des parties en poids des composants A + B + C + D) d'un deuxième polymère greffé qui contient un copolymère libre, c'est-à-dire chimiquement non lié au caoutchouc, présentant un poids moléculaire pondéral moyen de 60000 à 150000 g/mole, et
D) 0 à 20 parties en poids (par rapport à la somme des parties en poids des composants A + B + C + D) d'un ou de plusieurs polymères choisis dans le groupe constitué par le (co)polymère de vinyle exempt de caoutchouc et le poly(téréphtalate d'alkylène),
la composition étant exempte d'agents ignifuges.

**2.** Composition selon la revendication 1, contenant, comme composant B, un polymère greffé de

B.1 5 à 95% en poids d'un ou de plusieurs monomères de vinyle sur
B.2 95 à 5% en poids d'un ou de plusieurs caoutchoucs composites de silicone-acrylate comme base de greffage, le caoutchouc de silicone-acrylate contenant
B.2.1 65-95% en poids de caoutchouc de silicone et
B.2.2 35 à 5% en poids de caoutchouc de poly((méth)acrylate d'alkyle),

les deux composants de caoutchouc mentionnés B.2.1 et B.2.2 s'interpénétrant mutuellement dans le caoutchouc composite de manière telle qu'ils ne peuvent essentiellement pas être séparés l'un de l'autre.

**3.** Composition selon la revendication 2, les monomères de vinyle B.1 étant choisis parmi au moins un des groupes constitués par le styrène, l'$\alpha$-méthylstyrène, le méthacrylate de méthyle, l'acrylate de n-butyle et l'acrylonitrile.

**4.** Composition selon la revendication 1, contenant, comme composant C, un polymère greffé de

C.1) 5 à 95% en poids, par rapport au composant C, d'un mélange de
C.1.1) 65 à 85% en poids, par rapport à C.1, d'au moins un monomère choisi dans le groupe constitué par les vinylaromatiques, les vinylaromatiques à noyau substitué et les esters ($C_1$-$C_8$)-alkyliques de l'acide méthacrylique et
C.1.2) 15 à 35% en poids, par rapport à C.1, d'au moins un monomère choisi dans le groupe constitué par les vinylcyanures, les esters ($C_1$-$C_8$)-alkyliques de l'acide (méth)acrylique et les dérivés d'acides carboxyliques insaturés

sur

C.2) 95 à 5% en poids d'au moins une base de greffage présentant une température de transition vitreuse < 0°C, la base de greffage C.2) présentant une grosseur moyenne de particule ($d_{50}$) de 0,05 à 10 μm.

**5.** Composition selon la revendication 4, les bases de greffage C.2 étant choisies dans le groupe constitué par les caoutchoucs de diène, les caoutchoucs de copolymères à blocs de diène-vinyle, les caoutchoucs d'éthylène/propylène, les caoutchoucs d'éthylène/propylène/diène, les caoutchoucs d'acrylate, les caoutchoucs de polyuréthane, les caoutchoucs de silicone, les caoutchoucs de chloroprène et les caoutchoucs d'éthylène/acétate de vinyle, à l'exception des mélanges contenant des caoutchoucs de silicone et d'acrylate.

**6.** Composition selon la revendication 1, contenant comme composant C un polymère greffé, qui contient un copolymère libre, c'est-à-dire qui n'est chimiquement pas lié au caoutchouc, présentant un poids moléculaire pondéral moyen de 70 000 à 90 000 g/mole.

**7.** Composition selon la revendication 4, contenant comme composant C un polymère greffé préparé dans un procédé de polymérisation en masse, en solution, ou en masse-suspension, qui présente une teneur en caoutchouc (proportion du composant C.2 par rapport au polymère greffé C) de 10 à 20% en poids ainsi qu'une enveloppe de greffage, qui contient à chaque fois par rapport aux monomères de l'enveloppe de greffage 20 à 30% en poids d'au moins un des monomères selon C.1.2 et 70 à 80% en poids d'au moins un des monomères selon C.1.1.

**8.** Composition selon la revendication 1, contenant comme composant D 3 à 16 parties en poids (par rapport à la somme des parties en poids des composants A + B + C + D) d'un ou de plusieurs polymères choisis dans le groupe constitué par le (co)polymère de vinyle exempt de caoutchouc D.1 et le poly(téréphtalate d'alkylène) D.2.

**9.** Composition selon la revendication 1, contenant 0 à 50 parties en poids (à chaque fois par rapport à la somme des parties en poids des composants A + B + C + D) d'un ou de plusieurs additifs choisis dans le groupe constitué par les lubrifiants et les agents de démoulage, les agents de nucléation, les stabilisateurs, les antistatiques, les acides, les substances de remplissage et de renforcement ainsi que les colorants et les pigments.

**10.** Compositions selon la revendication 1, constituées par

A) 60 à 80 parties en poids (à chaque fois par rapport à la somme des parties en poids des composants A + B + C + D) de polycarbonate aromatique et/ou de polyestercarbonate aromatique,
B) 8 à 13 parties en poids (à chaque fois par rapport à la somme des parties en poids des composants A + B + C + D) d'un premier polymère greffé, **caractérisé en ce que** la base de greffage est un caoutchouc composite de silicone-acrylate constitué de caoutchouc de silicone et de caoutchouc de poly((méth)acrylate d'alkyle) qui s'interpénètrent mutuellement, la proportion de caoutchouc de silicone valant 65-95% en poids (par rapport à la base de greffage),
C) 3 à 7 parties en poids (par rapport à la somme des parties en poids des composants A + B + C + D) d'une deuxième base de greffage qui contient un copolymère libre, c'est-à-dire chimiquement non lié au caoutchouc, présentant un poids moléculaire pondéral moyen de 60000 à 150000 g/mole, et
D) 3 à 16 parties en poids (par rapport à la somme des parties en poids des composants A + B + C + D) d'un ou de plusieurs polymères choisis dans le groupe constitué par le (co)polymère de vinyle exempt de caoutchouc et le poly(téréphtalate d'alkylène),
E) 0,5 à 25 parties en poids (à chaque fois par rapport à la somme des parties en poids des composants A + B + C + D) d'un ou de plusieurs additifs choisis dans le groupe constitué par les lubrifiants et les agents de démoulage, les agents de nucléation, les stabilisateurs, les antistatiques, les acides, les substances de remplissage et de renforcement ainsi que les colorants et les pigments.

**11.** Compositions selon la revendication 10,
la proportion du composant B étant de 8 à 13 parties en poids (par rapport à la somme des parties en poids des composants A + B + C + D), et

la proportion de composants C étant de 3 à 7 parties en poids (par rapport à la somme des parties en poids des composants A + B + C + D).

**12.** Utilisation des compositions selon la revendication 1 pour la fabrication de corps façonnés.

**13.** Corps façonné contenant une composition selon l'une quelconque des revendications 1 à 11.

**14.** Corps façonné selon la revendication 13, **caractérisé en ce que** le corps façonné est une pièce d'un véhicule automobile, d'un véhicule ferroviaire, d'un avion bu d'un bateau ou une feuille, un profilé ou une partie de boîtier de n'importe quel type.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2002077417 A1
- JP 8259791 A
- JP 2000017136 A
- JP 2002069282 A
- WO 0039210 A
- EP 0641827 A
- JP 07316409 A
- DE AS1495626 B
- DE 2232877 A
- DE 2703376 A
- DE 2714544 A
- DE 3000610 A
- DE 3832396 A
- DE 3077934 A
- DE 2842005 A
- US 3419634 A
- DE 3334782 A
- DE 2940024 A
- DE 3007934 A
- US 5807914 A
- EP 430134 A
- US 4888388 A
- US 2891920 A
- US 3294725 A
- DE OS3631540 A
- EP 249964 A
- DE 2035390 A
- US 3644574 A
- DE 2248242 A
- GB PS1409275 A
- DE 2407674 A
- DE 2407776 A
- DE 2715932 A
- DE 1900270 A
- US PS3692744 A


### In der Beschreibung aufgeführte Nicht-Patentliteratur


- **SCHNELL.** Chemistry and Physics of Polycarbonates. Interscience Publishers, 1964
- **W. SCHOLTAN ; H. LANGE.** *Kolloid-Z. und Z. Polymere,* 1972, vol. 250, 782-796
- **W. SCHOLTAN ; H. LANGE.** *Kolloid, Z. und Z. Polymere,* 1972, vol. 250, 782-1796
- Ullmanns, Enzyklopädie der Technischen Chemie. 1980, vol. 19, 280 ff
- Kunststoff-Handbuch. Carl-Hanser-Verlag, 1973, vol. VIII, 695 ff